# EUROPEAN PATENT APPLICATION

(11) **EP 2 262 247 A1**
(43) Date of publication of application: **15.12.2010**
(21) Application number: 10165091.9
(22) Date of filing: 07.06.2010
(51) Int. Cl.: H04N 5/50, H04H 60/43, H04H 60/65, H04N 5/445

(54) **Broadcast receiving apparatus for updating channel information**

(30) Priority: 08.06.2009 JP 2009136916
(71) Applicant: Funai Electric Co., Ltd., Nakagaito Daito-shi Osaka 574-0013 (JP)
(72) Inventor: TAKAMURA, Masaaki, Daito-shi Osaka 574-0013 (JP)
(74) Representative: Grünecker, Kinkeldey, Stockmair & Schwanhäusser Anwaltssozietät

(57) **Abstract**

In a broadcast receiving apparatus, a storage 135 stores information of a predetermined channel, a judging section performs scan processing of the predetermined channel, stored in the storage 135, with a scan section at a predetermined timing to judge a possibility of receiving the digital broadcast signal of the predetermined channel. a channel memory updating section adds the information of the predetermined channel to a channel memory 134 when the judging section judges that the digital broadcast signal of the predetermined channel is receivable, and eliminates the information of the predetermined channel from the channel memory 134 when the judging section judges that the digital broadcast signal of the predetermined channel is nonreceivable.

## Description

### BACKGROUND OF THE INVENTION

### 1. Field of the Invention

The present invention relates to a broadcast receiving apparatus.

### 2. Description of Related Art

A broadcast receiving apparatus, receiving television broadcasting signals, conventionally, executes scan processing, detecting the channels receivable by the broadcast receiving apparatus, to store the information (such as frequency data) of the receivable channels in a channel memory in advance in order that a user can quickly start to watch a selected channel when the user selects a channel.

The scan processing like this is frequently performed in an ascending or descending order of the physical channels of broadcast signals, but a receiving apparatus executing the scan processing in a predetermined priority order is also known (see, for example, Japanese Patent Application Laid-Open Publication No. H 8-195914).

### SUMMARY OF THE INVENTION

Now, there is a special channel through which a broadcast is performed only for a specially fixed period in some district. Because broadcast signals themselves are completely off-the-air in the not-broadcasting period in this channel, even if a broadcast receiving apparatus is tuned to the channel during the not-broadcasting period, nothing is displayed on the screen thereof.

Consequently, if this channel is left to be always stored in a channel memory, it is led that a broadcast receiving apparatus can be tuned to the channel notwithstanding that no broadcasting is performed, and there is a possibility of causing confusion to a user. Furthermore, there is the problem of causing wasteful power consumption. On the other hand, if this channel is eliminated from the channel memory beforehand, there is the problem of user's missing a broadcast when the broadcast is performed in this channel.

It is an object of the present invention to provide a broadcast receiving apparatus capable of preventing user's missing a broadcast in a channel through which broadcasting is performed only for a specially fixed period without causing any user's confusion and any wasteful power consumption at the time of watching the channel.

To achieve at least one of the aforementioned objects or other objects, a broadcast receiving apparatus, comprises:
a scan section to perform scan processing to detect a channel through which a digital broadcast signal can be received;
a channel memory to store information of the channel detected in the scan processing by the scan section;
a storage to store information of a predetermined channel;
a judging section to perform the scan processing of the predetermined channel, stored in the storage, with the scan section at a predetermined timing to judge a possibility of receiving the digital broadcast signal of the predetermined channel; and
a channel memory updating section to add the information of the predetermined channel to the channel memory when the judging section judges that the digital broadcast signal of the predetermined channel is receivable, and to eliminate the information of the predetermined channel from the channel memory when the judging section judges that the digital broadcast signal of the predetermined channel is nonreceivable.

In accordance with a second aspect of the present invention, a broadcast receiving apparatus, comprises:
a scan section to perform scan processing to detect a channel through which a digital broadcast signal can be received;
a channel memory to store information of the channel detected in the scan processing by the scan section;
a storage to store information of a predetermined channel;
a judging section to perform the scan processing of the predetermined channel, stored in the storage, with the scan section at a predetermined timing to judge a possibility of receiving the digital broadcast signal of the predetermined channel;
a channel memory updating section to add the information of the predetermined channel to the channel memory when the judging section judges that the digital broadcast signal of the predetermined channel is receivable, and to eliminate the information of the predetermined channel from the channel memory when the judging section judges that the digital broadcast signal of the predetermined channel is nonreceivable; and
an informing section to inform a user of tunableness to the predetermined channel when the channel memory updating section adds the information of the predetermined channel to the channel memory, and to inform the user of untunableness to the predetermined channel when the channel memory updating section eliminates the information of the predetermined channel from the channel memory.

According to the present invention, it becomes possible that a broadcast receiving apparatus is tuned to a channel through which broadcasting is performed only for a specially fixed period only in the broadcasting period, and it is possible to prevent user's confusion and wasteful power consumption in a not-broadcasting period and user's missing of a broadcast during a broadcasting period.

### BRIEF DESCRIPTION OF THE DRAWINGS

FIG. 1 is a block diagram showing the configuration of the principal part of a broadcast receiving apparatus of an embodiment according to the present invention;
FIG. 2 is a flow chart showing the flow of scan processing executed with regard to a search channel;
FIG. 3 is a view showing an example of a screen for informing the tunableness to a search channel; and
FIG. 4 is a view showing an example of a screen for informing the untunableness to a search channel.

### DESCRIPTION OF THE PREFERRED EMBODIMENTS

In the following, an embodiment according to the present invention will be described with reference to the accompanying drawings. In addition, the scope of the present invention is not limited to the following embodiment and shown examples.

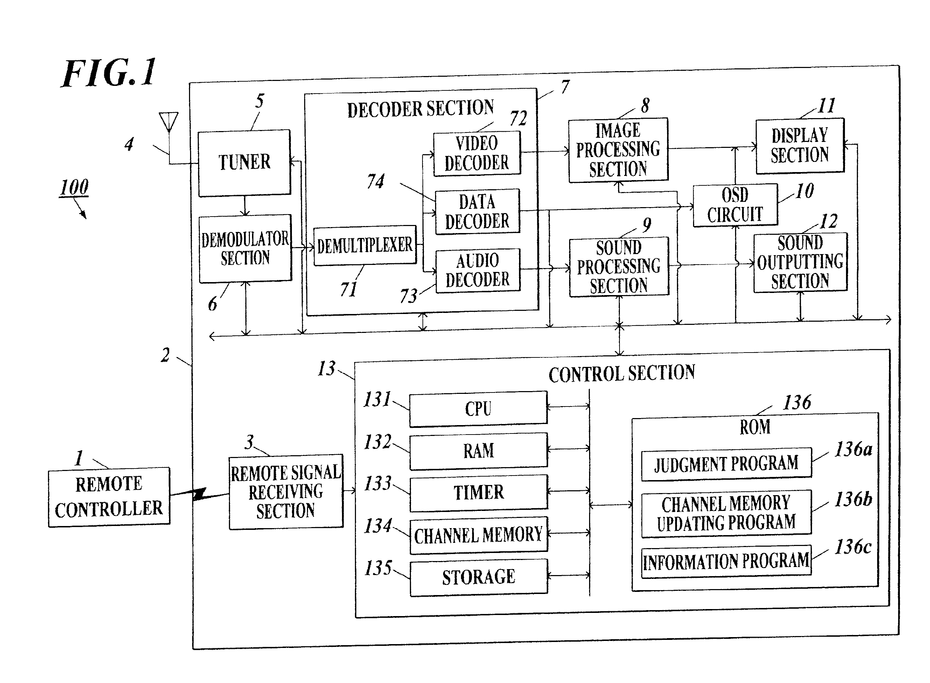

A broadcast receiving apparatus 100 of the present embodiment is, for example, a television receiver receiving a digital television broadcasting signal, and is composed of a remote controller (hereinafter referred to as "remote") 1, with which a user inputs various instructions, and an apparatus main body 2, subjected to the remote control by the remote 1, as shown in FIG. 1.

The remote 1 is provided with a plurality of buttons for a user to input various instructions to the apparatus main body 2. For example, the remote 1 is provided with a power source button, a program table displaying button, a numeric button, functioning as a one-touch button, an input switching button, a sound switching button, a returning button, cursor buttons, consisting of left, right, top, and bottom buttons, a determining button, a channel up/down button, a volume up/down button (none of them shown), and the like.

Identification information is previously assigned to each of these buttons, and the assigned identification information is stored in a predetermined storage region. Then, when a user operates a button, the identification information of the operated button is read, and a remote signal corresponding to the read identification information is generated to be transmitted from a not-shown transmission section.

The apparatus main body 2 is provided with a remote signal receiving section 3, an antenna 4, a tuner 5, a demodulator section 6, a decoder section 7, an image processing section 8, a sound processing section 9, an on screen display (OSD) circuit 10, a display section 11, a sound outputting section 12, a control section 13, and the like.

The remote signal receiving section 3 is composed of a photodiode, a sub central processing unit (SUB CPU), an amplifier section, a demodulator section, a decoder (none of them shown), and the like. When the photodiode, provided on the front panel of the apparatus main body 2, receives a remote signal transmitted from the remote 1, the SUB CPU makes the amplifier section amplify the received remote signal, and makes the demodulator section demodulate the amplified remote signal. The SUB CPU further makes the decoder perform various processing of the demodulated signal, such as waveform shaping, error correction, and the like. After that, the SUB CPU outputs the processed signal to the control section 13. The control section 13 obtains identification information from the input remote signal to perform the judgment of the operated button on the basis of the obtained identification information.

The antenna 4 is arranged to face toward a predetermined direction in the open air, and receives a high frequency digital broadcast signal transmitted from a broadcasting station side.

The tuner 5 extracts a signal in a specific frequency band among digital broadcast signals of high frequency signals, which have been input with the antenna 4 and the like, in conformity with a tuning instruction from the control section 13, and converts the extracted signal into an intermediate frequency signal (IF signal). After that, the tuner 5 performs the analog to digital (AD) conversion and the like of the intermediate frequency signal to output the processed signal to the demodulator section 6.

Furthermore, the tuner 5 detects a receivable channel by scanning an object frequency band in conformity with an instruction from the control section 13 in initial scan processing, executed at the time of the purchase of the broadcast receiving apparatus 100 or after house-moving and the like, and the scan processing in the execution of a judgment program 136a, which will be described later. Hereby, the tuner 5 constitutes a scan section of the present invention together with the CPU 131 of the control section 13. The result of the scan processing in the tuner 5 is output to the control section 13, and is stored in a channel memory 134, which will be described later.

The demodulator section 6, for example, executes the processing such as the digital demodulation and error correction to the signal of a channel to which the tuner 5 is tuned on the basis of the control of the control section 13, and generates a transport stream (TS) to output the generated TS to the decoder section 7.

The decoder section 7 is composed of a demultiplexer 71, a video decoder 72, an audio decoder 73, a data decoder 74, and the like.

The demultiplexer 71 demultiplexes a TS input from the demodulator section 6 into a plurality of streams including a video stream, an audio stream, program specific information/service information (PSI/SI), and the like. Then, the demultiplexer 71 obtains a necessary TS packet on the basis of the PSI, and outputs a video stream and an audio stream to the video decoder 72 and the audio decoder 73, respectively. Furthermore, the demultiplexer 71 outputs data such as program information (SI) to the data decoder 74.

The video decoder 72 decodes a video stream at a timing according to a decoding time stamp (DTS) by performing various pieces of processing, such as variable length decoding, inverse quantization, inverse discrete cosine transform (DCT), and motion compensation, to the video stream input from the demultiplexer 71, and thereby generates video data to output the generated vide data to the image processing section 8.

The audio decoder 73 decodes an audio stream input from the demultiplexer 71, and thereby generates audio data to output the generated audio data to the sound processing section 9.

The data decoder 74 decodes data input from the demultiplexer 71, and thereby obtains necessary information to supply the obtained necessary information to the control section 13.

The image processing section 8 performs various kinds of image processing to vide data input from the video decoder 72, and thereby generates a video signal. The generated video signal is once stored in a frame memory (not shown), and is output to the display section 11 at a reproduction timing according to a presentation time stamp (PTS).

The sound processing section 9 processes various kinds of sound processing to audio data input from the audio decoder 73, and thereby generates a sound signal to output the generated sound signal to the sound outputting section 12 at the reproduction timing according to the PTS.

The OSD circuit 10 generates OSD displaying data in accordance with the control of the control section 13, and superposes the generated OSD displaying data on a video signal output from the image processing section 8 to make the display section 11 display the video signal with the OSD displaying data as an OSD display.

The display section 11 is composed of a display (not shown), such as a liquid crystal display (LCD), a plasma display panel (PDP), or an organic electro luminescence (EL) display, and makes the display display an image based on a video signal input from the image processing section 8. Furthermore, the display section 11 performs a display for informing a user of the possibility of the tuning to a search channel (described below) in the execution of an information program 136c, which will be described below.

The sound outputting section 12 is composed of a speaker (not shown) and the like, and amplifies a sound based on a sound signal input from the sound processing section 9, and outputs the sound from the speaker.

The control section 13 is composed of a central processing unit (CPU) 131, a random access memory (RAM) 132, a timer 133, the channel memory 134, a storage 135, a read only memory (ROM) 136, and the like, and the control section 13 controls each section of the broadcast receiving apparatus 100.

The CPU 131 reads a processing program, stored in the ROM 136, and the like according to an input signal input from each section, and expands the read processing program and the like in the RAM 132 to execute the processing program and the like. The CPU 131, then, outputs an output signal to each section of the apparatus main body 2 to control the whole body of the broadcast receiving apparatus 100.

The RAM 132 includes a program storing region, in which various programs to be executed by the CPU 131 are expanded, and a data storing region, in which input data, processing results generated at the time of the execution of these processing programs, and the like are stored, and the RAM 132 is used as a work area of the CPU 131.

The timer 133 performs timing processing to generate the reference time of the whole body of the broadcast receiving apparatus 100.

The channel memory 134 is composed of a nonvolatile memory, and stores the physical channel, the frequency data, and the like of a broadcast channel, which has been detected by scan processing of the tuner 5 and can be received by the present broadcast receiving apparatus 100. The programs of those channels stored in the channel memory 134 can be watched by being selected by a user with a remote operation and by the tuning of the tuner 5 to the channels.

The storage 135 is composed of a nonvolatile memory, and stores the information, such as the physical channel and the frequency data, of a predetermined channel (hereinafter referred to as "search channel") through which broadcasting is performed only in a specially fixed period separately and independently from the channel memory 134. The information is referred to at the time of performing the scan processing of the search channel in the execution of the judgment program 136a, described below.

The ROM 136 previously stores a processing program, data, and the like, and stores, for example, the judgment program 136a, a channel memory updating program 136b, and the information program 136c.

The judgment program 136a is a program for enabling the CPU 131 to realize the function of performing the scan processing of a search channel stored in the storage 135 with the tuner 5 as a scan section at a predetermined timing, and of judging the possibility of receiving the digital broadcast signal of the search channel. In the present embodiment, the judgment program 136a and the CPU 131 constitute a judging section.

The channel memory updating program 136b is a program for enabling the CPU 131 to realize the function of adding the information of a search channel to the channel memory 134 if the CPU 131 judges that the digital broadcast signal of the search channel is receivable in the execution of the judgment program 136a, and of eliminating the information of a search channel from the channel memory 134 if the CPU 131 judges that the digital broadcast signal of the search channel is nonreceivable. The judgment program 136a and the CPU 131 constitute a channel memory updating section in the present embodiment.

The information program 136c is a program for enabling the CPU 131 to realize the function of informing a user of the tunableness to a search channel if the CPU 131 adds the information of the search channel to the channel memory 134 in the execution of the channel memory updating program 136b, and of informing the user of the untunableness to a search channel if the CPU 131 eliminates the information of the search channel from the channel memory 134. The information program 136c, the CPU 131, and the display section 11 constitute an informing section in the present embodiment.

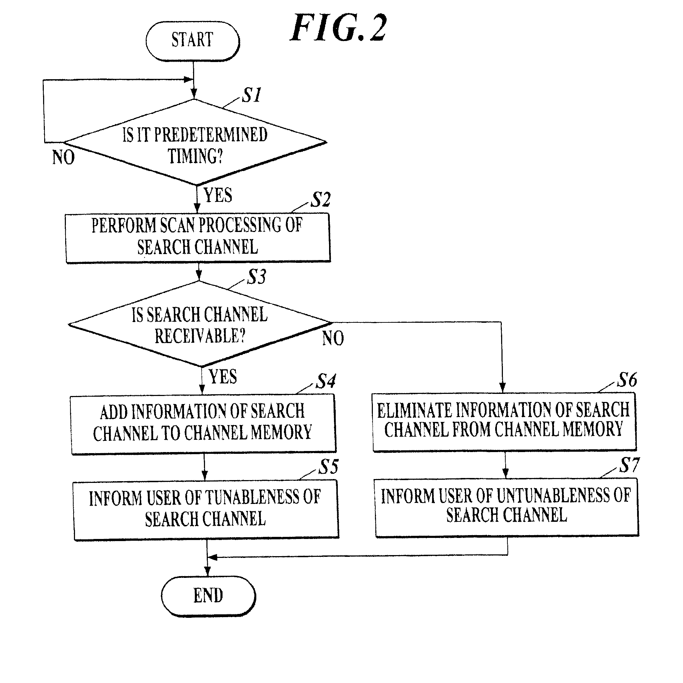

The scan processing to be executed concerning a search channel by the execution of the above-stated judgment program 136a, the channel memory updating program 136b, and the information program 136c will be described here with reference to the flow chart of FIG. 2.

First of all, the CPU 131 monitors the arrival of a predetermined timing at Step S1. The predetermined timing means, for example, the timing at which the broadcast receiving apparatus 100 moves to the standby mode thereof by an operation of turning off the power source thereof after an end of watching, and the timing at every predetermined time (for example, one hour, three hours, six hours, twelve hours, and twenty-four hours) here. Furthermore, the predetermined timing may be the timing at which a user instructs the execution of the scan processing of a search channel, the timing at which an operation of turning on the power source, and the like. In addition, it is also possible to regard a user's operation of selecting a search channel with the remote 1 as the operation of instructing the execution of the scan processing of the search channel.

If the CPU 131 judges that the predetermined timing arrives at Step S1 (Step S1: Yes), then the CPU 131 executes the scan processing of a search channel at Step S2. In the execution of the scan processing of the search channel, the CPU 131 reads the frequency data and the like of the search channel from the storage 135 to tune the tuner 5 to the frequency of the search channel. Then, the CPU 131 judges whether the digital broadcast signal of the search channel is receivable or not on the basis of the existence of the locking of the front end and the carrier to noise ratio (C/N) of receiving in the state in which the tuner 5 is tuned to the frequency of the search channel at Step S3.

If the CPU 131 judges that the digital broadcast signal of the search channel is receivable (Step S3: Yes), then the CPU 131 advances the processing to Step S4. If the information of the search channel is not stored in the channel memory 134, the CPU 131 adds the information of the physical channel, the frequency data, and the like of the search channel to the channel memory 134.

Hereby, if a user operates the remote 1 to select the search channel, then the tuner 5 is tuned to the search channel, and the digital broadcast signal of the search channel is led to be received. Thus the watching of the search channel becomes possible.

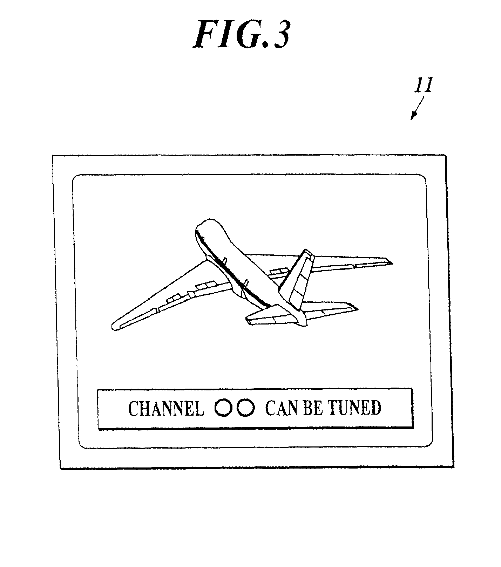

Furthermore, at Step S5, the CPU 131 informs the user of the tunableness to the search channel (for example, "Channel O O can be tuned") by performing the OSD display on the display section 11 as shown in FIG. 3, and ends the present processing.

On the other hand, if the CPU 131 judges that the digital broadcast signal of the search channel is nonreceivable at Step S3 (Step S3: No), then the CPU 131 advances the processing to Step S6. If the information of the search channel is stored in the channel memory 134, then the CPU 131 eliminates the information such as the physical channel and the frequency data of the search channel from the channel memory 134.

Hereby, even if the user operates the remote 1 to select the search channel, the information of the search channel does not exist in the channel memory 134, the tuning of the tuner 5 to the search channel results in not-being executed.

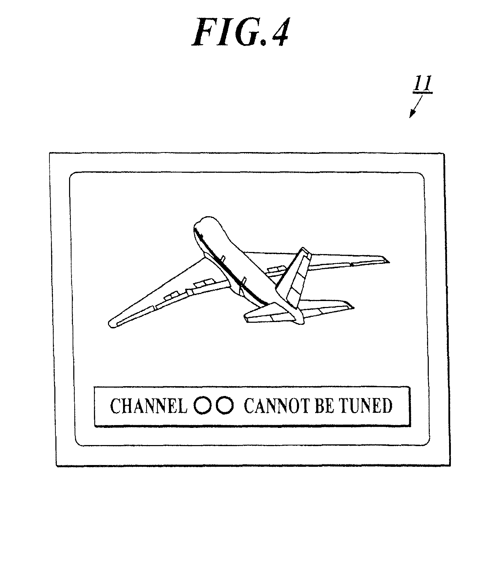

Furthermore, at Step S7, the CPU 131 informs the user of the untunableness to the search channel (for example, "Channel O O cannot be tuned") by performing the OSD display on the display section 11 as shown in FIG. 4, and ends the present processing.

In addition, it is also adoptable to inform a user of the possibility of the tuning to a search channel only at the timing of adding/eliminating the information of the search channel against the channel memory 134, or it is also adoptable to inform a user of the possibility of the tuning to a search channel every execution of scan processing of the search channel. Furthermore, it is also possible to configure the broadcast receiving apparatus 100 so as to inform a user of the possibility of the tuning to a search channel at the time of turning on the power source thereof or at the timing of every predetermined time.

The broadcast receiving apparatus 100 of the present embodiment described above is provided with the scan section (tuner 5, CPU 131), performing the scan processing of detecting a channel through which a digital broadcast signal can be received, the channel memory 134, storing the information of the channel detected by the scan processing by the scan section (tuner 5, CPU 131), and the storage 135, storing the information of the search channel (predetermined channel). The scan processing of a search channel (predetermined channel), stored in the storage 135, is performed at a predetermined timing by the scan section (tuner 5, CPU 131), and the possibility of the reception of the digital broadcast signal of the search channel (predetermined channel) is judged by the judging section (judgment program 136a, CPU 131). Furthermore, if it is judged by the judging section (judgment program 136a, CPU 131) that the digital broadcast signal of the search channel (predetermined channel) is receivable, then the information of the search channel (predetermined channel) is added to the channel memory 134 by the channel memory updating section (channel memory updating program 136b, CPU 131). If the digital broadcast signal of the search channel (predetermined channel) is judged to be nonreceivable by the judging section, then the information of the search channel (predetermined channel) is eliminated from the channel memory 134 by the channel memory updating section.

Consequently, the information of the predetermined channel is led to be added to the channel memory 134 only when the digital broadcast signal of the channel is receivable, and it becomes possible to tune the tuner 5 to the channel through which broadcasting is performed only in a specially fixed period only in the broadcasting period. Hereby, it is possible to prevent the confusion of a user and the wasteful power consumption necessary for the tune processing of the channel in the case where the channel is left to be always stored in the channel memory 134 despite the nonexistence of the broadcast. Furthermore, it is possible to prevent the user from being unable to grasp the existence of the predetermined channel to miss a broadcast of the channel in the case where the information of the channel is left to be eliminated from the channel memory 134 despite the existence of the broadcast.

Furthermore, if the information of a search channel (predetermined channel) is added to the channel memory 134 by the channel memory updating section (channel memory updating program 136b, CPU 131), it is informed to the user by the informing section (information program 136c, CPU 131, display section 11) that the tuner 5 can be tuned to the search channel (predetermined channel). If the information of a search channel (predetermined channel) is eliminated from the channel memory 134, it is informed to the user that the tuner 5 cannot be tuned to the search channel (predetermined channel).

Hereby, a user can cognize the existence of a broadcast in a predetermined channel easily and clearly, and it is more surely prevented that the user tries to select the predetermined channel despite the nonexistence of the broadcast, or that the user cannot cognize the existence of the broadcast to miss the broadcast.

In addition, the scope of the present invention is not limited to the embodiment described above, but various improvements and changes of the design may be performed without departing from the sprit and the scope of the present invention.

For example, the broadcast receiving apparatus 100 may be provided with a section to allow a user to select whether to add the information of a predetermined channel to the channel memory 134 or not if the predetermined channel is receivable.

Furthermore, the broadcast receiving apparatus 100 may be provided with a section to allow a user to select in advance whether to set each channel performing a broadcast only in a specially fixed period as a predetermined channel or not.

Furthermore, the broadcast receiving apparatus 100 may be provided with a section to allow a user to select the timing of executing the scan processing of each predetermined channel.

Furthermore, the displays shown in FIGS. 3 and 4 are only examples of the applications of a section to inform a user of the possibility of tuning in to a predetermined channel, and, for example, it is also possible to configure the broadcast receiving apparatus 100 so as to inform a user of the possibility of the tuning to the predetermined channel by the display of the program table of an electronic program guide (EPG), an announcement using sound, the lighting of a light emitting diode (LED), and the like.

Furthermore, the broadcast receiving apparatus 100 may be provided with a section to inform a user of the impossibility of the selection of a predetermined channel when the user selects the predetermined channel with the remote 1 in the case where the information of the predetermined channel is not stored in the channel memory 134.

Furthermore, it is needless to say that the present invention is not limited to the embodiment described above, but that the present invention can suitably be changed.

## Claims

1. A broadcast receiving apparatus, comprising:
a scan section to perform scan processing to detect a channel through which a digital broadcast signal can be received;
a channel memory to store information of the channel detected in the scan processing by the scan section;
a storage to store information of a predetermined channel;
a judging section to perform the scan processing of the predetermined channel, stored in the storage, with the scan section at a predetermined timing to judge a possibility of receiving the digital broadcast signal of the predetermined channel; and
a channel memory updating section to add the information of the predetermined channel to the channel memory when the judging section judges that the digital broadcast signal of the predetermined channel is receivable, and to eliminate the information of the predetermined channel from the channel memory when the judging section judges that the digital broadcast signal of the predetermined channel is nonreceivable.

2. A broadcast receiving apparatus, according to claim 1, further comprising:
an informing section to inform a user of tunableness to the predetermined channel when the channel memory updating section adds the information of the predetermined channel to the channel memory, and to inform the user of untunableness to the predetermined channel when the channel memory updating section eliminates the information of the predetermined channel from the channel memory.
